(19) **Europäisches Patentamt / European Patent Office / Office européen des brevets**

(11) **EP 1 693 783 B1**

(12) **EUROPEAN PATENT SPECIFICATION**

(45) Date of publication and mention of the grant of the patent:
**11.02.2009 Bulletin 2009/07**

(51) Int Cl.:
**G06K 9/00** *(2006.01)* **G06K 9/64** *(2006.01)*

(21) Application number: **05250973.4**

(22) Date of filing: **21.02.2005**

(54) **Fast method of object detection by statistical template matching**

Schnelles Verfahren zum Detektieren von Objekten durch statistischen Mustervergleich

Procédé rapide de détection d'un objet par comparaison statistique à un modèle

(84) Designated Contracting States:
**DE FR GB**

(43) Date of publication of application:
**23.08.2006 Bulletin 2006/34**

(73) Proprietors:
• **Mitsubishi Electric Information Technology Centre Europe B.V.**
**Guildford,**
**Surrey GU2 7YD (GB)**
Designated Contracting States:
**GB**
• **MITSUBISHI DENKI KABUSHIKI KAISHA**
**Chiyoda-ku**
**Tokyo 100-8310 (JP)**
Designated Contracting States:
**DE FR**

(72) Inventors:
• **Sibiryakov, Alexander**
**Guildford**
**Surrey GU2 9TJ (GB)**
• **Bober, Miroslaw**
**Guildford**
**Surrey GU1 2SE (GB)**

(74) Representative: **Whitlock, Holly Elizabeth Ann et al**
**R G C Jenkins,**
**26 Caxton Street**
**London SW1H 0RJ (GB)**

(56) References cited:
**US-A1- 2001 033 675      US-A1- 2003 091 238**

• **NIKOLAIDIS N ET AL: "Robust image watermarking in the spatial domain" SIGNAL PROCESSING, ELSEVIER SCIENCE PUBLISHERS B.V. AMSTERDAM, NL, vol. 66, no. 3, 28 May 1998 (1998-05-28), pages 385-403, XP004124959 ISSN: 0165-1684**
• **BINGLONG XIE ET AL: "Component Fusion for Face Detection in the Presence of Heteroscedastic Noise" PROCEEDINGS ANNUAL CONFERENCE OF THE GERMAN SOCIETY FOR PATTERN RECOGNITION DAGM, 10 September 2003 (2003-09-10), pages 434-441, XP002316745**
• **VIOLA P ET AL: "Rapid object detection using a boosted cascade of simple features" PROCEEDINGS 2001 IEEE CONFERENCE ON COMPUTER VISION AND PATTERN RECOGNITION. CVPR 2001. KAUAI, HAWAII, DEC. 8 - 14, 2001, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 1 OF 2, 8 December 2001 (2001-12-08), pages 511-518, XP010583787 ISBN: 0-7695-1272-0**

**Description**

The invention relates to a method and apparatus for detecting or locating objects in images using template matching.

Object detection has a wide variety of applications in computer vision, such as video surveillance, vision-based control, human-computer interfaces, medical imaging, augmented reality and robotics. Additionally, it provides input to higher level vision tasks, such as 3D reconstruction and 3D representation. It also plays an important role in relation to video database applications such as content-based indexing and retrieval.

A robust, accurate and high performance approach is still a great challenge today. The difficulty level of this problem highly depends on how the object of interest is defined. If a template describing a specific object is available, object detection becomes a process of matching features between the template and the image under analysis. Object detection with an exact match is generally computationally expensive and the quality and speed of matching depends on the details and the degree of precision provided by the object template.

A few major techniques have been used for template matching.

1) Image subtraction. In this technique, the template position is determined from minimizing the distance function between the template and various positions in the image [Nicu Sebe, Michael S. Lew, and Dionysius P. Hujismans, H., 2000: Toward Improved Ranking Metrics. IEEE Transactions on Pattern Analysis and Machine Intelligence, pp. 1132-1142, 22(10), 2000]. Although image subtraction techniques require less computation time than the correlation-based techniques, described below, they perform well in restricted environments where imaging conditions, such as image intensity and viewing angles between the template and images containing this template are the same.

2) Correlation. Matching by correlation utilizes the position of the normalized cross-correlation peak between a template and an image to locate the best match [Chung, KL.,2002: Fast Stereo Matching Using Rectangular Subregioning and 3D Maximum-Surface Techniques, International Journal of Computer Vision. vol. 47, no. 1/2/3, pp. 99-117, May 2002]. This technique is generally immune to noise and illumination effects in the images, but suffers from high computational complexity caused by summations over the entire template. Point correlation can reduce the computational complexity to a small set of carefully chosen points for the summations.

3) Deformable template matching. Deformable template matching approaches are more suitable for cases where objects vary due to rigid and non-rigid deformations [A.K.Jain, Y.Zhong, S.Lakshmanan, Object Matching Using Deformable Templates, IEEE Transactions on Pattern Analysis and Machine Intelligence, Vol. 18, Issue 3 (March 1996), 267-278]. These variations can be caused by either the deformation of the object per se or just by different object pose relative to the camera. Because of the deformable nature of objects in most video, deformable models are more appealing in tracking tasks. In this approach, a template is represented as a bitmap describing the characteristic contour/edges of an object shape. A probabilistic transformation on the prototype contour is applied to deform the template to fit salient edges in the input image. An objective function with transformation parameters, which alter the shape of the template, is formulated reflecting the cost of such transformations. The objective function is minimized by iteratively updating the transformation parameters to best match the object.

4) Fourier methods. If an acceleration of the computational speed is needed or if the images were acquired under varying conditions or they are corrupted by frequency-dependent noise, then Fourier methods [Y. Keller, A. Averbuch, Unified Approach To FFT-Based Image Registration, IEEE International Conference on Acoustics, Speech, and Signal Processing (ICASSP) 2002, Orlando, USA, May 2002] are preferred rather than the correlation-like methods. They exploit the Fourier representation of the images in the frequency domain. The phase correlation method is based on the Fourier Shift Theorem and was originally proposed for the registration of translated images. It computes the cross-power spectrum of the template and the images and looks for the location of the peak in its inverse.

US 2003/0091238 discloses comparing pixel value variances within sliding image blocks to the variance of a template block of corresponding size.

A problem addressed by this invention is robust object detection in complex environments, such as low-quality images and cluttered backgrounds.

Another problem addressed by the invention is real-time implementation of a template matching method, which is used for object detection. Well-known methods of template matching have a number of disadvantages:

(a) The cross-correlation method is robust but computationally expensive. For a template of size M x N it requires O(MN) operations, usually multiplications, per image pixel, which may not be suitable for real-time performance.

(b) Phase correlation based on Fast Fourier Transform is fast but it works stably only for a template size which is comparable to the image size. In typical applications an object of interest can occupy less then 1% of image size, which leads to a poorly defined output of the phase correlation method. If the rough position of objects is known a priori, e.g. the object is tracked in the sequence of images, the size of the region of interest can be reduced. In this case phase correlation is applicable, but two new problems arise: (1) Another method is required to detect the object in the first frame in order to initialize region tracking; (2) The application cannot work with still images where there is no a priori information about object location.

To overcome the problems with existing methods a new method of template matching is proposed. It is based on statistical hypothesis testing and its performance does not depend on template size, but depends only on template complexity.

The requirement of real-time implementation often conflicts with the requirement of robustness. Implementations of the present method are robust to:

1) Scale changes; the method gives similar results when image is scaled by a scale factor in the range of (0.5, 2);
2) Local image warping; the method is insensitive to small geometric disturbances;
3) Non-linear intensity changes; the method can work with highly compressed images. Successful tests were performed with JPEG images having compression quality as low as 1 or 2 out of 100.

In the specification, we assume an image to be a function of N coordinate variables $I(x_1, x_2, ..., x_N)$. Different cases of such defined images are:

$N=1$; this is a 1D-image or 1D-signal which can be, for example, any real signal, a pixel profile extracted from a 2D-image or any integral function (histogram, lateral projection) derived from an image.

$N=2$; this is a usual 2D-image $I(x,y)$ in its original or pre-processed form. The pre-processing can involve any image processing operations, such as filtering, segmentation, edge or feature extraction.

$N=3$; this is a volumetric image (voxel image, image sequence or video organised as image stack) in its original or pre-processed form

Arbitrary $N$; an application can use higher dimensions for data representation, for example $N=4$ can be used in the case of volumetric images changing in time.

Aspects of the invention are set out in the accompanying claims. Some aspects of the proposed method of object detection are set out below.

Description of the object of interest or its part is by a set of regions To = $T_1 \cup ... \cup T_M$. This description is called, in the proposal, *Topological Template* or simply *Template.* The template describes only the topology of the object (spatial relation of its parts) and not its radiometric (associated with radiation, such as colour, intensity etc.) properties. Each region $T_i$ can consist of several disconnected regions.

The proposed method of template matching is called as Statistical Template Matching, because only statistical characteristics of the pixel groups (mean and dispersion) are used in the analysis. In the matching process the similarity measure between a template and image regions is based on statistical hypothesis testing. For each pixel x and its neighbourhood R(x) two hypotheses are considered:

$H_0$: R(x) is random
$H_1$: R(x) is similar to the template

The decision rule for accepting $H_0$ or $H_1$ is based on testing whether the characteristics of pixel groups (defined by template regions) are statistically different from each other and the derived similarity measure is similar to signal-to-noise ratio. It is computed as:

$$S(\mathbf{x}) = \frac{|T_0|\sigma^2(T_0)}{|T_1|\sigma^2(T_1) + ... + |T_M|\sigma^2(T_M)}, \qquad (1)$$

where $\sigma^2(Q)$ is the dispersion of the image values in a region Q, and |Q| designates the number of pixels inside the region Q.

The Statistical Template matching can be easily adapted to achieve real-time performance by using the well-known technique called integral images. In this modification each template region $T_i$ consists of union of rectangles. For 2D-images in this case each dispersion value in (1) can be computed by 8k memory references, where k is a number of rectangles,. The conventional way of computing $\sigma^2(Q)$ requires |Q| memory references.

The following interpretation of the Statistical Template Matching output can be used to detect objects. For each pixel the matching produces the similarity measure $S$ and a set of statistical characteristics $\sigma^2(T_0), ..., \sigma^2(T_N), m(T_0), ..., m(T_N)$, where $m(T_i)$ is a region mean used to compute $\sigma^2(T_i)$. Similarity values form a similarity map, where a high value corresponds to a probable location of the object. Thus, comparison of the similarity measure with a threshold is applied as an object/non-object location classifier. To finalize the object detection algorithm, the following procedures can be applied:

1) Non-maxima suppression gives local maxima of the similarity map and integer coordinates of object centres;
2) Fitting a polynomial surface to the similarity map in the vicinity of a local maximum gives subpixel location of the object;
3) Application-dependent analysis of statistics $\sigma^2(T_0),..., \sigma^2(T_N), m(T_0),..., m(T_N)$ helps to reduce the number of false alarms. When radiometric properties of the object regions are known in advance (for example, it is known that some of the regions are darker then the others), additional conditions, such as $m(T_i) < m(T_j)$ reject unwanted configurations.

Some extensions of the proposed method are set out below.

1) Multi-resolution approach. The method can be applied in a coarse-to-fine framework, when a few resolutions of the image are created (so called image pyramid) and the processing starts from the coarsest level and the detection results are refined in the finer resolutions. In this case a multi-resolution version of the template (template pyramid) is created. The process starts from the matching of the coarsest template in the coarsest image resolution. After extracting all possible object locations from the coarse similarity map, the process is performed only inside the region-of-interest (ROI) at the finer resolutions.
2) Object tracking. In such applications the method initialises ROIs in the first images of a sequence and tries to predict their location in the next images, thus reducing the search area for the Statistical Template Matching. Statistical filtering of the results obtained from a few successive frames can be used to make a decision about object presence.
3) Template modification. In the multi-resolution or object tracking frameworks the template can be adjusted based on analysis of current detection results in order to improve object detection in the next steps. For example, some template regions can be merged or excluded if such actions improve similarity value. Also global size of the template can be adjusted according to width of peaks in similarity maps.
4) Multiple templates. The situation is possible when a few templates can represent an object. Application of the Statistical Template Matching results in multiple similarity maps, which can be combined into single similarity map before extracting object locations. The simplest way of combining is pixel-by-pixel multiplication.

Embodiments of the invention will be described with reference to the accompanying drawings of which:

Fig. 1 is a flow diagram of a method of an embodiment of the invention;
Fig. 2a is an example of a template;
Fig. 2b illustrates the template of Fig. 2a located in an image for a method of an embodiment of the invention;
Fig. 3a is an image region as an object of interest;
Figs. 3b to 3d are examples of templates corresponding to the object of interest of Fig. 3a;
Fig. 4 contains examples of images of faces and corresponding graphs illustrating statistical template matching;
Fig. 5 shows images of a face, including results of detection, templates for facial feature detection, and similarity maps;
Fig. 6a shows a satellite image with fiducial marks;
Fig. 6b shows a similarity map corresponding to Fig. 6a; and
Fig. 6c shows templates for use with Fig. 6a.
Fig. 7a shows a road image;
Fig. 7b shows the image of Fig. 7a after orthogonal transformation;
Fig. 7c shows templates for detecting road markings;
Fig. 8a shows a watermark image;
Fig. 8b shows the least significant bits of the image of Fig. 8a;
Fig. 8c and 8d are graphs showing the results of statistical template matching; and
Fig. 8e shows templates for the image of Fig. 8a.

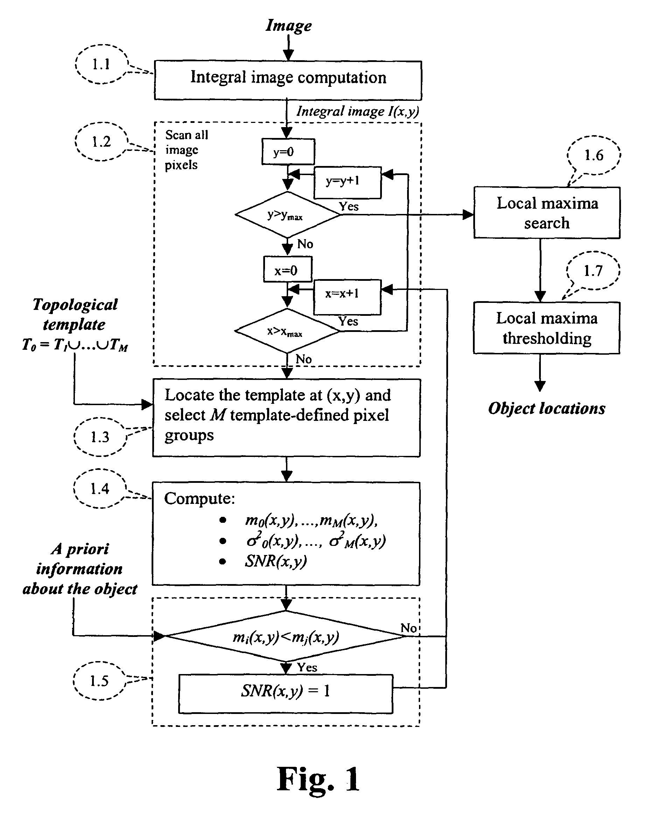

An implementation of the proposed method in a 2D-case is set out below.
The block-scheme of the method is shown in Fig.1. First the integral images are computed using an input image which potentially contains an object of interest (block 1.1) as described in more detail below. The image is then scanned in on a pixel-by-pixel basis (1.2) and the template is centred at a current pixel (1.3). A set of statistical values and the similarity measure are computed for the image region covered by the template (1.4). Then a priori information is checked using the computed statistical values. If certain conditions are not satisfied the current pixel cannot be a centre of the object, so the lowest value of the similarity measure is assigned (1.5). When all similarity values are computed by moving the template to centre it on each pixel in the image in turn resulting in a similarity map, this map is post-processed in order to extract possible locations of the object (1.6). And finally the similarity values of the detected objects are compared with a statistical significance level or with application-defined thresholds (1.7).

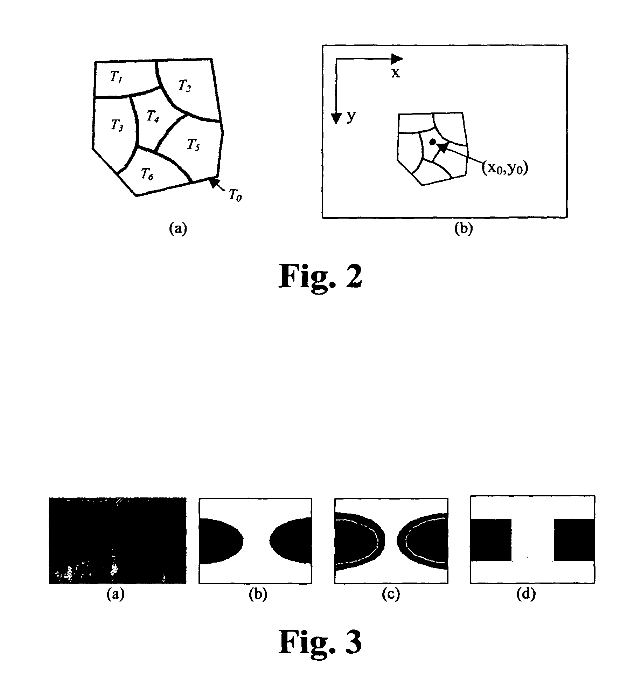

In the proposed method the object of interest or its part is described by a template consisting of a set of regions To = $T_1 \cup ... \cup T_M$. The template describes only the topology of the object (spatial relations of its parts), not its radiometric properties. An example of a topological template with six regions is shown in Fig.2a. The template determines how to interpret the local image region covered by the template located at some pixel. When the template is centred at a pixel $(x_0, y_0)$ as shown in Fig.2b, the local statistics are computed in M+1 image regions ($T_0 ... T_6$ regions in Fig.2). These statistics are used for computing a similarity measure between the image and the template.

General guidance for creating templates of an object is as follows:

a) The number of regions M should correspond to a number of distinctive object parts;
b) If some object parts are similar in their radiometric properties they should be included in one region of the template;
c) If the object contains highly changeable regions (high frequency textures, edges) they can be excluded from the template for better performance of the method;
d) There are no assumptions on region sizes or shapes. Each region T; can consist of several disconnected regions. Each region can contain holes (unused regions);
e) Better performance of the method can be achieved by simplifying the shape of the regions. Thus if each region $T_i$ is represented as a union of rectangles then the processing time is minimal;
f) The best performance (suitable for real-time applications) can be achieved in the following case: the template shape (the region $T_0$) is rectangle, all other regions $T_i$ consist of unions of rectangles and there are no holes (unused regions) in the template.

Examples of templates for a face detection task are shown in Fig.3. The templates were created based on the observation that eye regions are usually darker than surrounding skin region (Fig.3a). Each template consists of two regions, defined by black and white areas. Note that one template region (shown in black) consists of two disconnected regions. The template in Fig.3c also includes holes (shown in grey) in order to exclude an area of intensity transition from dark to light values. The template in Fig.3d is a simplified version of Fig.3b, which is suitable for real-time implementation.

If the template is represented as union of rectangles of different sizes, a special image pre-processing can be applied for fast computation of statistical features (mean and dispersion) inside these rectangles (Block 1.1, Fig.1). Transformation of the image into the integral representation provides fast computation of such features with only four pixel references, the coordinates of corners of the rectangles, as discussed below.

We define integral images $Sum(x,y)$ and $SumQ(x,y)$ as follows:

$$Sum(x, y) = \sum_{a \le x} \sum_{b \le y} I(a, b) = I(x, y) + S(x - 1, y) + S(x, y - 1) - S(x - 1, y - 1) \qquad (2)$$

$$SumQ(x, y) = \sum_{a \le x} \sum_{b \le y} I^2(a, b) = I^2(x, y) + SQ(x - 1, y) + SQ(x, y - 1) - SQ(x - 1, y - 1) \quad (3)$$

where $I(x,y)$ is original image and $I(x,y) = 0$ for $x, y < 0$.

The similarity measure between a template and image regions is based on statistical hypothesis testing. For each pixel $(x_0, y_0)$ and its neighbourhood $R(x_0, y_0)$ we consider two hypotheses:

$H_0$: $R(x_0, y_0)$ is random

$H_1$: $R(x_0, y_0)$ is similar to the template

The decision rule for accepting $H_0$ or $H_1$ is based on testing whether the means of M pixel groups are statistically different from each other. The M groups are defined by the template, the centre of which is located at the pixel $(x_0, y_0)$.

Consider first the case of two regions: $T_0 = T_1 \cup T_2$. Application of the well-known statistical *t-test* to two pixel groups leads to the following similarity measure (some equivalent transformations are skipped):

$$(t)^2 = \left(\frac{Signal}{Noise}\right)^2 = \left(\frac{Difference\ between\ group\ means}{Variability\ of\ groups}\right)^2 = \frac{(m(T_1) - m(T_2))^2}{\frac{\sigma^2(T_1)}{|T_1|} + \frac{\sigma^2(T_2)}{|T_2|}} = \cdots \qquad (4)$$

$$= \frac{|T_0|\sigma^2(T_0)}{|T_1|\sigma^2(T_1) + |T_2|\sigma^2(T_2)} - 1$$

Removing the constant from this expression, we obtain a similarity measure in the form (1).

When the template is composed of three or more regions another statistical technique is used to obtain the similarity measure. This technique is called Analysis Of Variances (ANOVA), which is mathematically equivalent to the t-test, but it is used only if the number of groups is more than two.

Denote *Between-group variation* and *Within-group variation* as $Q_1(T_1,...,T_M)$ and $Q_2(T_1,...,T_M)$. These variations are computed as follows:

$$Q_1(T_1,...,T_M) = \sum_{i=1}^{M} |T_i| m^2(T_i) - |T_0| m^2(T_0) \qquad (5)$$

$$Q_2(T_1,...,T_M) = \sum_{i=1}^{M} |T_i| \sigma^2(T_i) \qquad (6)$$

These variances are connected as follows:

$$|T_0|\sigma^2(T_0) = Q_1(T_1,...,T_M) + Q_2(T_1,...,T_M) \qquad (7)$$

We use the Fisher criterion as a similarity measure (equivalent transformations, followed from (5),(6),(7), are skipped):

$$F = \frac{Q_1 /(M-1)}{Q_2 /(|T_0|-M)} = \cdots = \frac{|T_0|-M}{M-1}\left(\frac{|T_0|\sigma^2(T_0)}{\sum_{i=1}^{M}|T_i|\sigma^2(T_i)} - 1\right) \qquad (8)$$

Removing the constants from this expression, we obtain a similarity measure in the form (1).

Thus the result of the statistical template matching at a point $(x_0, y_0)$ can be expressed as:

$$S(x_0, y_0) = \frac{|T_0|\sigma^2(T_0)}{|T_1|\sigma^2(T_1) + ... + |T_M|\sigma^2(T_M)} \qquad (9)$$

Once the similarity value is computed, it can be tested whether it is large enough to say that the image region is similar to the object of interest, using statistical thresholding. Statistical tables of significance can be used for such a test. To test the significance, a risk level should be set. Usually a risk level of 0.05 is used. Given the risk level and the number of degrees of freedom, the t-value (from (4)) or F-value (from(8)) can be compared to a threshold taken from standard tables of significance to determine whether the similarity value is large enough to be significant.

As mentioned above, using the integral images can increase the speed of configuration. Using the integral images, the computation of $|R|\sigma^2(R)$ for any rectangular region R requires 2*4 pixel references instead of $2*|R|$:

$$|R|\sigma^2(R) = (SumQ(x_2, y_2) - SumQ(x_1-1, y_2) - SumQ(x_2, y_1-1) + SumQ(x_1-1, y_1-1)) -$$

$$-\frac{1}{|R|}(Sum(x_2, y_2) - Sum(x_1-1, y_2) - Sum(x_2, y_1-1) + Sum(x_1-1, y_1-1))^2 \equiv$$

$$SumQ(R) - \frac{1}{|R|}Sum^2(R)$$

$$(10)$$

where the last equality is a definition and $(x_1, y_1)$, $(x_2, y_2)$ are coordinates of the left-top and right-bottom point of the rectangle R..

For regions consisting of a union of rectangles: $T_i = R_1 \cup R_2 \cup ... R_{Ki}$ the computation of $|T_i|\sigma^2(T_i)$ is similar:

$$|T_i|\sigma^2(T_i) = \sum_j SumQ(R_j) - \frac{1}{|R_j|}Sum^2(R_j) \qquad (11)$$

Using the above equation the computation of the similarity between the template and the image does not depend on template size, but depends on template complexity (number of rectangles inside it).

Additional optimisation is performed using (5)-(7), from which it is obvious that it is not necessary to compute $m(T_M)$, $\sigma^2(T_M)$, because these values can be derived from $m(T_0),.., m(T_{M-1})$, $\sigma^2(T_0),...,\sigma^2(T_{M-1})$. This optimisation can give a significant increase in performance if: (a) only a small number of regions is used (M=2,3) or (b) the region $T_M$ consists of a very large number of rectangles.

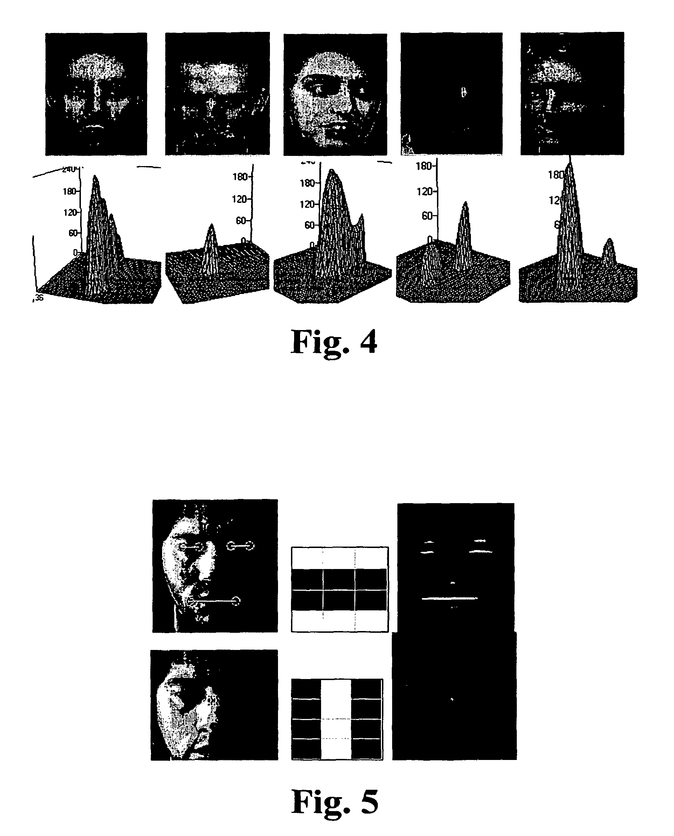

Figure 4 shows examples of face detection by the proposed method. The template shown in Figure 4d was used in statistical template matching. The top row of Fig. 4 shows face images together with the position of the maximum of the similarity measure. The bottom row shows the corresponding fragments of the similarity maps, computed using (9). For this illustration images from the AT&T Face Database were used. The images are available from AT&T Laboratories, Cambridge web-site http://www.uk.research.att.com/facedatabase.html

The template matching method from the proposal is not specific for a face detection task, which was used to illustrate the method. It can be used in any application dealing with object detection where object models can be defined and simplified in advance. This method works well especially in a bimodal case (dark object in light background or vice versa) or when the object model can be simplified so that it is composed of a set of rectangles. If the model can be composed of rectangles, real-time performance of the method can be achieved; which is not always the case with correlation based techniques.

Figure 5 shows the application of the method to facial features detection. The top row shows detection of horizontal features (eyes, nostrils, mouth). The bottom row shows detection of vertical features (nose). The left column shows the results of detection. The middle column shows templates and the right column shows similarity maps.

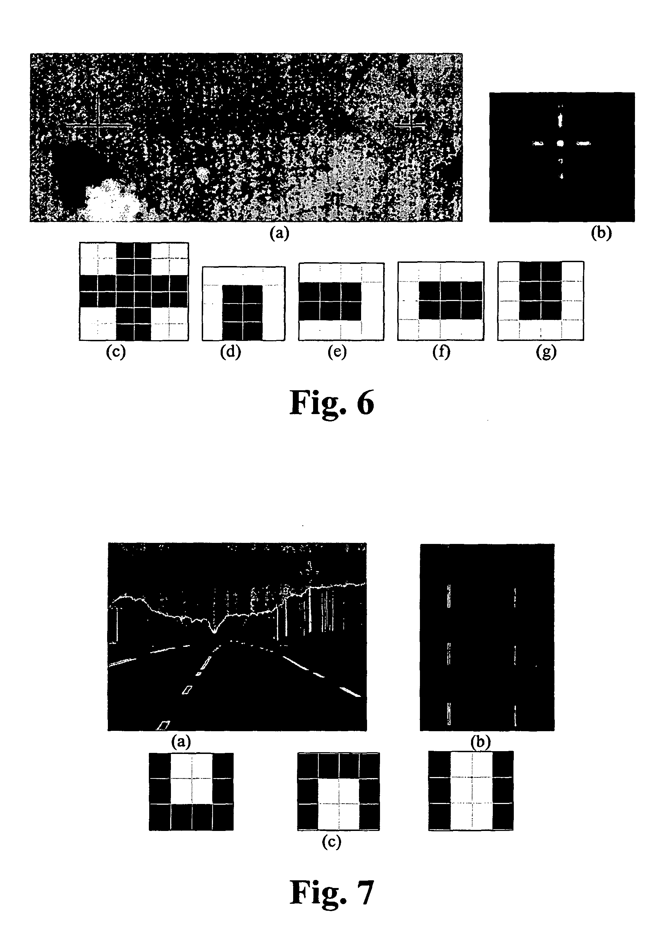

A typical example of fiducial mark detection is the automatic interior orientation of satellite images when fiducial marks made by camera should be detected (Figure 6) in order to correct image distortions. Fig. 6 shows (a) Fiducial marks in a satellite image (crosses); (b) The combined similarity map obtained by statistical template matching using templates (c)-(g)..

Another application of the proposed template matching method could be road markings detection. After transformation of the road image into orthogonal view, the markings became well-defined objects and can be detected by template matching. Fig. 7 shows (a) Road image - view from a car; (b) 'Aerial' view of the road after orthogonal transformation; (c) Examples of templates for detecting the beginning, end and the body of the marking segment.

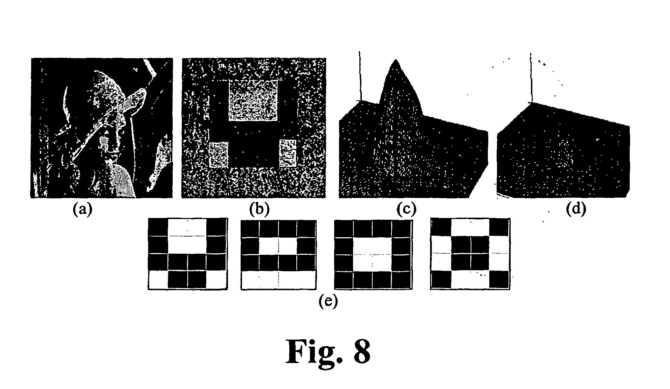

Figure 8 shows an application of the proposed method to the image watermarking problem. Here we use a watermark consisting of uniform regions. The watermark in this example is embedded into the least significant bits of the image (Fig. 8a), but other embedding methods can be used. After watermark image extraction (Fig. 8b), a method is required to read the information encoded in the watermark. The proposed statistical template matching can be used for such reading. The matching is performed for all possible watermarks (some of them are shown in Fig. 8e) and possible locations and similarity values are detected (Fig. 8c, d show two examples). The template resulting in the highest similarity value is considered to be the watermark. Fig. 8 shows (a) Watermarked image; (b) Least significant bits of the watermarked image; (c) Result of statistical template matching (similarity map) using the template corresponding to the watermark (left template in Fig.(e)); (d) Result of statistical template matching (similarity map) using some arbitrary template; (e) Examples of templates used to read the watermark.

In the description above, the similarity measure is such that a higher value signifies closer similarity, and local maxima are detected. However, depending on the similarity measure used, other values could signify closer similarity, such as lower values, so that local minima are detected. References to higher values, local maxima etc should be interpreted accordingly.

In the specification, the term statistical means relating to the distribution of some quantity, such as colour, intensity etc. In this specification, the term "image" is used to describe an image unit, including after processing such as to change resolution, upsampling or downsampling or in connection with an integral image, and the term also applies to other similar terminology such as frame, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

The image may be a grayscale or colour image, or another type of multi-spectral image, for example, IR, UV or other electromagnetic image, or an acoustic image etc.

The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as microchips. Components of a system in an apparatus according to an embodiment of the invention may be provided remotely from other components, for example, over the Internet.

**Claims**

1. A method for detecting an object in an image comprising:

    comparing a topological template comprising a plurality of M regions (Q) for the object with regions of an image, and
    determining a similarity measure (S(x)), wherein the similarity measure is determined using a statistical measure based on statistical values comprising the variance of pixel values within each region of the image corresponding to the template.

2. The method of claim 1 wherein the statistical measure is defined by the equation:

$$S(\mathbf{x}) = \frac{|T_0|\sigma^2(T_0)}{|T_1|\sigma^2(T_1) + ... + |T_M|\sigma^2(T_M)},$$

    where: $\sigma^2(Q)$ is the dispersion i.e. variance of the pixel values in a region Q, and
    |Q| designates the number of pixels inside the region Q.

3. The method of claim 1 or claim 2 wherein the statistical measure involves statistical hypothesis testing.

4. The method of claim 1, 2 or 3 wherein the M regions of the template correspond to regions of the object and their spatial relations.

5. The method of any one of claims 1 to 4 wherein the template is the union of M regions.

6. The method of claim any one of claims 1 to 5 wherein regions of the object having similar radiometric properties, such as colour, intensity etc are combined in one region of the template.

7. The method of any one of claims 1 to 6 wherein one or more regions of the object contains one or more areas which are unused in template matching.

8. The method of any one of claims 1 to 7 wherein at least one region of the object comprises unconnected sub-regions.

9. The method of any of claims 1 to wherein the regions of the object correspond to simple shapes.

10. The method of claim 9 wherein the shapes have straight edges.

11. The method of claim 10 wherein the shapes are rectangles.

12. The method of any one of claims 1 to 11 wherein the similarity measure involves each of the plurality of M regions of the template and a region corresponding to the whole template.

13. The method of any one of claims 1 to 12 wherein statistical values are used for each of the regions of the image corresponding to M or M+1 regions of the template.

14. The method of claim 1 wherein the statistical measure is applied to pixel groups of two regions in accordance with the statistical t-test.

15. The method of claim 14 wherein the similarity measure is defined by:

$$(t)^2 = \left( \frac{Signal}{Noise} \right)^2 = \left( \frac{Difference\ between\ group\ means}{Variability\ of\ groups} \right)^2 = \frac{(m(T_1) - m(T_2))^2}{\frac{\sigma^2(T_1)}{|T_1|} + \frac{\sigma^2(T_2)}{|T_2|}} = \dots$$

$$= \frac{|T_0|\sigma^2(T_0)}{|T_1|\sigma^2(T_1) + |T_2|\sigma^2(T_2)} - 1.$$

16. The method of claim 1 wherein the statistical measure is applied to pixel groups of three or more regions in accordance with the analysis of variances (ANOVA) test.

17. The method of claim 16 wherein the similarity measure is defined by:

$$F = \frac{Q_1/(M-1)}{Q_2/(|T_0|-M)} = \dots = \frac{|T_0|-M}{M-1} \left( \frac{|T_0|\sigma^2(T_0)}{\sum_{i=1}^{M}|T_i|\sigma^2(T_i)} - 1 \right)$$

where: F is the Fisher criterion;
$Q_1(T_1,\dots,T_M)$ is between-group variation, and
$Q_2(T_1,\dots,T_M)$ is within-group variation.

18. The method of claim 15 wherein the similarity measure is defined by:

$$S(x_0, y_0) = \frac{|T_0|\sigma^2(T_0)}{|T_1|\sigma^2(T_1) + \dots + |T_M|\sigma^2(T_M)}$$

where: $S(x_0, y_0)$ is the similarity measure at point $(x_0, y_0)$;
$\sigma^2(Q)$ is the dispersion of the pixel values in a region Q, and
$|Q|$ designates the number of pixels inside the region Q.

**19.** The method of any of claims 1 to 18 comprising comparing the similarity measure with a threshold.

**20.** The method of claim 19 comprising using statistical thresholding or a statistical significance level.

**21.** The method of claim 20 comprising setting a risk level, and using the risk level, the degrees of freedom and a table of significance.

**22.** The method of any of claims 1 to 21 comprising deriving an integral image from the image and using the integral image in the calculation of the similarity measure.

**23.** The method of claim 22 comprising calculating the similarity measure using the integral image by the computation of $|R|\sigma^2(R)$ for any rectangular region R having 2*4 pixel references according to the relation:

$$|R|\sigma^2(R) = (SumQ(x_2, y_2) - SumQ(x_1 - 1, y_2) - SumQ(x_2, y_1 - 1) + SumQ(x_1 - 1, y_1 - 1)) -$$
$$-\frac{1}{|R|}(Sum(x_2, y_2) - Sum(x_1 - 1, y_2) - Sum(x_2, y_1 - 1) + Sum(x_1 - 1, y_1 - 1))^2 \equiv$$
$$SumQ(R) - \frac{1}{|R|}Sum^2(R)$$

where: $(x_1, y_1)$, $(x_2, y_2)$ are coordinates of the left-top and right-bottom point of the rectangle R.

**24.** The method of claim 23 comprising calculating the similarity measure using the integral image by the computation of $|T_i|\sigma^2(T_i)$ for regions consisting of a union of rectangles $T_i = R_1 \cup R_2 \cup ... R_{Ki}$ according to the relation:

$$|T_i|\sigma^2(T_i) = \sum_j SumQ(R_j) - \frac{1}{|R_j|}Sum^2(R_j)$$

**25.** The method of any of claims 1 to 24 comprising deriving a similarity measure for each of a plurality of regions in the image to derive a similarity map, and identifying local maxima or minima according to the similarity measure.

**26.** The method of claim 25 comprising comparing local maxima or minima with a threshold.

**27.** The method of any of claims 1 to 26 comprising using additional conditions regarding the object of interest in object detection.

**28.** The method of claim 27 where the additional conditions involve statistical values derived in the statistical hypothesis testing.

**29.** The method of any of claims 1 to 28 comprising using a plurality of templates each representing an object and deriving a similarity measure using each of the plurality of templates, and using the plurality of similarity measures, such as by combining, to locate the object.

**30.** The method of any of claims 1 to 29 comprising generating a plurality of versions of the image at different resolutions and a plurality of versions of the template at different resolutions, performing template matching at a first resolution and template matching at a second higher resolution.

**31.** The method of claim 30 wherein the matching at a first resolution is to detect a region of interest containing the object, and the matching at a second resolution is carried out within the region of interest.

**32.** The method of claim 30 or claim 31 including adjusting the template for a resolution, for example, by merging or excluding template regions, or changing the size or shape of the template or template regions, depending on detection results at a different resolution.

**33.** A method of tracking an object in a sequence of images comprising detecting an object using the method of any of claims 1 to 32, predicting an approximate location of the object in a subsequent image and using the prediction to determine a region of interest in the subsequent image, and using the method of any of claims 1 to 31 in the region of interest to detect the object.

**34.** The method of claim 33 including adjusting the template for an image in the sequence of images, for example, by merging or excluding template regions, or changing the size or shape of the template or template regions, depending on detection results in a different image in the sequence of images.

**35.** The method of any preceding claim for detecting facial features and/or faces.

**36.** The method of any preceding claim for detecting features in satellite images, geographical images or the like.

**37.** The method of any preceding claim for detecting fiduciary marks, road markings, watermarks or the like.

**38.** Apparatus for executing the method of any of claims 1 to 37.

**39.** A control device programmed to execute the method of any of claims 1 to 37.

**40.** Apparatus comprising the control device of claim 39, and storage means for storing images.

**41.** A computer program, system or computer-readable storage medium for executing the method of any of claims 1 to 37.

**Patentansprüche**

**1.** Verfahren zum Detektieren eines Objekts in einem Bild, umfassend:

Vergleichen eines topologischen Musters, umfassend eine Mehrzahl von M Bereichen (Q) für das Objekt, mit Bereichen eines Bildes, und
Bestimmen eines Ähnlichkeitsmaßes (S(x)), wobei das Ähnlichkeitsmaß mittels eines statistischen Maßes auf der Grundlage von statistischen Werten, umfassend die Varianz von Pixelwerten innerhalb jedes Bereichs des Bildes, der dem Muster entspricht, bestimmt wird.

**2.** Verfahren nach Anspruch 1, wobei das statistische Maß durch folgende Gleichung definiert ist:

$$S(x) = \frac{|T_0|\sigma^2(T_0)}{|T_1|\sigma^2(T_1) + \ldots + |T_M|\sigma^2(T_M)},$$

wobei: $\sigma^2$ (Q) die Dispersion, d.h. die Varianz, der Pixelwerte in einem Bereich Q ist; und
|Q| die Anzahl von Pixeln innerhalb des Bereichs Q angibt.

**3.** Verfahren nach Anspruch 1 oder Anspruch 2, wobei das statistische Maß statistisches Hypothesentesten einbindet.

**4.** Verfahren nach Anspruch 1, 2 oder 3, wobei die M Bereiche des Musters Bereichen des Objekts und deren räumlichen Relationen entsprechen.

**5.** Verfahren nach einem der Ansprüche 1 bis 4, wobei das Muster die Vereinigung von M Bereichen ist.

**6.** Verfahren nach einem der Ansprüche 1 bis 5, wobei Bereiche des Objekts, die ähnliche radiometrische Eigenschaften, beispielsweise Farbe, Intensität usw., aufweisen, in einem Bereich des Musters kombiniert werden.

7. Verfahren nach einem der Ansprüche 1 bis 6, wobei ein oder mehrere Bereiche des Objekts eine oder mehrere Flächen enthalten, die beim Mustervergleich nicht verwendet werden.

8. Verfahren nach einem der Ansprüche 1 bis 7, wobei mindestens ein Bereich des Objekts nicht verbundene Unterbereiche umfasst.

9. Verfahren nach einem der Ansprüche 1 bis 8, wobei die Bereiche des Objekts einfachen Formen entsprechen.

10. Verfahren nach Anspruch 9, wobei die Formen gerade Kanten aufweisen.

11. Verfahren nach Anspruch 10, wobei die Formen Rechtecke sind.

12. Verfahren nach einem der Ansprüche 1 bis 11, wobei das Ähnlichkeitsmaß jeden aus der Mehrzahl von M Bereichen des Musters und einen Bereich, der dem gesamten Muster entspricht, einbindet.

13. Verfahren nach einem der Ansprüche 1 bis 12, wobei statistische Werte für jeden der Bereiche des Bildes verwendet werden, die M oder M+1 Bereichen des Musters entsprechen.

14. Verfahren nach Anspruch 1, wobei das statistische Maß gemäß dem statistischen T-Test auf Pixelgruppen von zwei Bereichen angewandt wird.

15. Verfahren nach Anspruch 14, wobei das Ähnlichkeitsmaß definiert wird durch:

$$(t)^2 = \left(\frac{Signal}{Rauschen}\right)^2 = \left(\frac{Differenz\,zwischen\,Gruppenmittelwerten}{Variabilität\,der\,Gruppen}\right)^2 = \frac{(m(T_1) - m(T_2))^2}{\dfrac{\sigma^2(T_1)}{|T_1|} + \dfrac{\sigma^2(T_2)}{|T_2|}} = \ldots$$

$$= \frac{|T_0|\sigma^2(T_0)}{|T_1|\sigma^2(T_1) + |T_2|\sigma^2(T_2)} - 1.$$

16. Verfahren nach Anspruch 1, wobei das statistische Maß gemäß dem Varianzanalysetest (ANOVA) auf Pixelgruppen von drei oder mehr Bereichen angewandt wird.

17. Verfahren nach Anspruch 16, wobei das Ähnlichkeitsmaß definiert wird durch:

$$F = \frac{Q_1/(M-1)}{Q_2/(|T_0|-M)} = \ldots = \frac{|T_0|-M}{M-1}\left(\frac{|T_0|\sigma^2(T_0)}{\sum\limits_{i=1}^{M}|T_i|\sigma^2(T_i)} - 1\right)$$

wobei: F das Fisher-Kriterium ist;
$Q_1 (T_1, \ldots, T_M)$ die Variation zwischen Gruppen ist; und
$Q_2(T_1, \ldots, T_M)$ die Variation innerhalb Gruppen ist.

18. Verfahren nach Anspruch 15, wobei das Ähnlichkeitsmaß definiert wird durch:

$$S(x_0, y_0) = \frac{|T_0|\sigma^2(T_0)}{|T_1|\sigma^2(T_1) + \dots + |T_M|\sigma^2(T_M)}$$

wobei: $S(x_0, y_0)$ das Ähnlichkeitsmaß an Punkt $(x_0, y_0)$ ist;
$\sigma^2(Q)$ die Dispersion der Pixelwerte in einem Bereich Q ist; und
$|Q|$ die Anzahl von Pixeln innerhalb des Bereichs Q angibt.

**19.** Verfahren nach einem der Ansprüche 1 bis 18, umfassend das Vergleichen des Ähnlichkeitsmaßes mit einem Schwellwert.

**20.** Verfahren nach Anspruch 19, umfassend das Verwenden statistischer Schwellwertbildung oder eines statistischen Signifikanzniveaus.

**21.** Verfahren nach Anspruch 20, umfassend das Vorgeben eines Risikograds und das Verwenden des Risikograds, der Freiheitsgrade und einer Signifikanztabelle.

**22.** Verfahren nach einem der Ansprüche 1 bis 21, umfassend das Ableiten eines Integral-Bildes aus dem Bild und das Verwenden des Integral-Bildes bei der Berechnung des Ähnlichkeitsmaßes.

**23.** Verfahren nach Anspruch 22, umfassend das Berechnen des Ähnlichkeitsmaßes anhand des Integral-Bildes durch Berechnung von $|R|\sigma^2(R)$ für jedweden rechteckigen Bereich R mit 2*4 Pixelreferenzen gemäß der Relation:

$$|R|\sigma^2(R) = (SumQ(x_2, y_2) - SumQ(x_1 - 1, y_2) - SumQ(x_2, y_1 - 1) + SumQ(x_1 - 1, y_1 - 1)) -$$

$$-\frac{1}{|R|}(Sum(x_2, y_2) - Sum(x_1 - 1, y_2) - Sum(x_2, y_1 - 1) + Sum(x_1 - 1, y_1 - 1))^2 \equiv$$

$$SumQ(R) - \frac{1}{|R|}Sum^2(R)$$

wobei: $(x_1, y_1)$, $(x_2, y_2)$ Koordinaten des linken oberen bzw. des rechten unteren Punktes des Rechtecks R sind.

**24.** Verfahren nach Anspruch 23, umfassend das Berechnen des Ähnlichkeitsmaßes anhand des Integral-Bildes durch Berechnung von $|T_i|\sigma^2(T_i)$ für Bereiche, die aus einer Vereinigung von Rechtecken $T_i = R1 \cup R2 \cup \dots R_{Ki}$ bestehen, gemäß der Relation:

$$|T_i|\sigma^2(T_i) = \sum_j SumQ(R_j) - \frac{1}{|R_j|}Sum^2(R_j)$$

**25.** Verfahren nach einem der Ansprüche 1 bis 24, umfassend das Ableiten eines Ähnlichkeitsmaßes für jeden aus einer Mehrzahl von Bereichen in dem Bild, um eine Ähnlichkeitskarte abzuleiten, und das Identifizieren von lokalen Maxima oder Minima gemäß dem Ähnlichkeitsmaß.

**26.** Verfahren nach Anspruch 25, umfassend das Vergleichen lokaler Maxima oder Minima mit einem Schwellwert.

**27.** Verfahren nach einem der Ansprüche 1 bis 26, umfassend das Verwenden zusätzlicher Bedingungen betreffend das bei der Objekterkennung relevante Objekt.

**28.** Verfahren nach Anspruch 27, wobei die zusätzlichen Bedingungen statistische Werte einbinden, die beim statistischen Hypothesentesten abgeleitet wurden.

**29.** Verfahren nach einem der Ansprüche 1 bis 28, umfassend das Verwenden einer Mehrzahl von Mustern, wobei jedes ein Objekt darstellt, und das Ableiten eines Ähnlichkeitsmaßes mittels jedem aus der Mehrzahl von Mustern, und das Verwenden der Mehrzahl von Ähnlichkeitsmaßen, beispielsweise durch Kombinieren, um das Objekt zu lokalisieren.

**30.** Verfahren nach einem der Ansprüche 1 bis 29, umfassend das Generieren einer Mehrzahl von Versionen des Bildes mit verschiedenen Auflösungen und einer Mehrzahl von Versionen des Musters mit verschiedenen Auflösungen, das Durchführen eines Mustervergleichs mit einer ersten Auflösung und eines Mustervergleichs mit einer zweiten, höheren Auflösung.

**31.** Verfahren nach Anspruch 30, wobei der Vergleich mit einer ersten Auflösung einen relevanten Bereich, der das Objekt enthält, detektieren soll und der Vergleich mit einer zweiten Auflösung innerhalb des relevanten Bereichs durchgeführt wird.

**32.** Verfahren nach Anspruch 30 oder Anspruch 31, umfassend das Einstellen des Musters für eine Auflösung, beispielsweise durch Zusammenführen oder Ausschließen von Musterbereichen, oder das Ändern der Größe oder Gestalt des Musters oder von Musterbereichen in Abhängigkeit von Detektierergebnissen mit einer anderen Auflösung.

**33.** Verfahren zum Verfolgen eines Objekts in einer Bildfolge, umfassend das Detektieren eines Objekts anhand des Verfahrens nach einem der Ansprüche 1 bis 32, das Prognostizieren eines ungefähren Orts des Objekts in einem nachfolgenden Bild und das Verwenden der Prognose, um einen relevanten Bereich in dem nachfolgenden Bild zu bestimmen, und das Verwenden des Verfahrens nach einem der Ansprüche 1 bis 31 in dem relevanten Bereich, um das Objekt zu detektieren.

**34.** Verfahren nach Anspruch 33, umfassend das Einstellen des Musters für ein Bild in der Bildfolge, beispielsweise durch Zusammenführen oder Ausschließen von Musterbereichen, oder das Ändern der Größe oder Gestalt des Musters oder von Musterbereichen in Abhängigkeit von Detektierergebnissen in einem anderen Bild in der Bildfolge.

**35.** Verfahren nach einem der vorhergehenden Ansprüche zum Detektieren von Gesichtsmerkmalen und/oder Gesichtern.

**36.** Verfahren nach einem der vorhergehenden Ansprüche zum Detektieren von Merkmalen in Satellitenbildern, geografischen Bildern oder dergleichen.

**37.** Verfahren nach einem der vorhergehenden Ansprüche zum Detektieren von Rahmenmarken, Straßenmarkierungen, Wasserzeichen oder dergleichen.

**38.** Vorrichtungen zum Ausführen des Verfahrens nach einem der Ansprüche 1 bis 37.

**39.** Steuervorrichtung, die programmiert ist, um das Verfahren nach einem der Ansprüche 1 bis 37 auszuführen.

**40.** Vorrichtung, umfassend die Steuervorrichtung nach Anspruch 39 und Speichermittel zum Speichern von Bildern.

**41.** Computerprogramm, System oder rechnerlesbares Speichermedium zum Ausführen des Verfahrens nach einem der Ansprüche 1 bis 37.

**Revendications**

**1.** Procédé pour détecter un objet dans une image comprenant les étapes suivantes :

- on compare un gabarit topologique comprenant une pluralité de M régions (Q) pour l'objet avec des régions d'une image, et
- on détermine une mesure de similarité (S(x)), laquelle mesure de similarité est déterminée en utilisant une mesure statistique basée sur des valeurs statistiques comprenant la variance des valeurs de pixel à l'intérieur de chaque région de l'image correspondant au gabarit.

**2.** Procédé selon la revendication 1, dans lequel la mesure statistique est définie par l'équation :

$$S(\mathbf{x}) = \frac{|T_0|\sigma^2(T_0)}{|T_1|\sigma^2(T_1) + ... + |T_M|\sigma^2(T_M)},$$

dans laquelle :

$\sigma^2(Q)$ est la dispersion, c'est-à-dire la variance, des valeurs de pixel dans une région Q, et
|Q| désigne le nombre de pixels à l'intérieur de la région Q.

**3.** Procédé selon la revendication 1 ou 2, dans lequel la mesure statistique implique des tests d'hypothèses statistiques.

**4.** Procédé selon la revendication 1, 2 ou 3, dans lequel les M régions du gabarit correspondent à des régions de l'objet et à leurs relations spatiales.

**5.** Procédé selon l'une quelconque des revendications 1 à 4, dans lequel le gabarit est l'union des M régions.

**6.** Procédé selon l'une quelconque des revendications 1 à 5, dans lequel des régions de l'objet ayant des propriétés radiométriques similaires, telles que la couleur, l'intensité, etc., sont combinées dans une seule région du gabarit.

**7.** Procédé selon l'une quelconque des revendications 1 à 6, dans lequel une ou plusieurs régions de l'objet contient ou contiennent une ou plusieurs zones qui est ou sont inutilisées dans la concordance avec le gabarit.

**8.** Procédé selon l'une quelconque des revendications 1 à 7, dans lequel au moins une région de l'objet comprend des sous-régions non raccordées.

**9.** Procédé selon l'une quelconque des revendications 1 à 8, dans lequel les régions de l'objet correspondent à des formes simples.

**10.** Procédé selon la revendication 9, dans lequel les formes ont des bords droits.

**11.** Procédé selon la revendication 10, dans lequel les formes sont des rectangles.

**12.** Procédé selon l'une quelconque des revendications 1 à 11, dans lequel la mesure de similarité implique chaque région de la pluralité des M régions du gabarit et une région correspondant à la totalité du gabarit.

**13.** Procédé selon l'une quelconque des revendications 1 à 12, dans lequel des valeurs statistiques sont utilisées pour chacune des régions de l'image correspondant aux M ou M+1 régions du gabarit.

**14.** Procédé selon la revendication 1, dans lequel la mesure statistique s'applique aux groupes de pixels de deux régions en fonction du test statistique "t".

**15.** Procédé selon la revendication 14, dans lequel la mesure de similarité est définie par l'équation suivante :

$$(t)^2 = \left(\frac{Signal}{Bruit}\right)^2 = \left(\frac{\text{Différence entre les moyennes de groupe}}{\text{Variabilité des groupes}}\right) = \frac{(m(T_1) - m(T_2))^2}{\dfrac{\sigma^2(T_1)}{|T_1|} + \dfrac{\sigma^2(T_2)}{|T_2|}} = ...$$

$$= \frac{|T_0|\sigma^2(T_0)}{|T_1|\sigma^2(T_1) + |T_2|\sigma^2(T_2)} - 1$$

**16.** Procédé selon la revendication 1, dans lequel la mesure statistique s'applique aux groupes de pixels de trois régions ou plus en fonction du test d'analyse de variances (ANOVA).

**17.** Procédé selon la revendication 16, dans lequel la mesure de similarité est définie par l'équation suivante :

$$F = \frac{Q_1/(M-1)}{Q_2/(|T_0|-M)} = ... = \frac{|T_0|-M}{M-1}\left(\frac{|T_0|\sigma^2(T_0)}{\sum_{i=1}^{M}|T_i|\sigma^2(T_i)} - 1\right)$$

dans laquelle :

F est le critère de Fisher ;
$Q_1(T_1,...,T_M)$ est la variation intergroupe, et
$Q_2(T_1,...,T_M)$ est la variation intragroupe.

**18.** Procédé selon la revendication 15, dans lequel la mesure de similarité est définie par l'équation suivante :

$$S(x_0, y_0) = \frac{|T_0|\sigma^2(T_0)}{|T_1|\sigma^2(T_1) + ... + |T_M|\sigma^2(T_M)}$$

dans laquelle :

$S(x_0 y_0)$ est la mesure de similarité au point $(x_0 y_0)$
$\sigma^2(Q)$ est la dispersion des valeurs de pixels dans une région Q, et
$|Q|$ désigne le nombre de pixels à l'intérieur de la région Q.

**19.** Procédé selon l'une quelconque des revendications 1 à 18, comprenant la comparaison de la mesure de similarité avec un seuil.

**20.** Procédé selon la revendication 19, comprenant l'utilisation d'un seuillage statistique ou d'un niveau de signification statistique.

**21.** Procédé selon la revendication 20, comprenant la fixation d'un niveau de risque et l'utilisation du niveau de risque, des degrés de liberté et d'un tableau de signification.

**22.** Procédé selon l'une quelconque des revendications 1 à 21, comprenant l'obtention d'une image intégrale de l'image et l'utilisation de l'image intégrale dans le calcul de la mesure de similarité.

**23.** Procédé selon la revendication 22, comprenant le calcul de la mesure de similarité en utilisant l'image intégrale par le calcul de $|R|\sigma^2(R)$ pour toute région rectangulaire R ayant des références de 2*4 pixels selon la relation :

$$|R|\sigma^2(R) = (SumQ(x_2, y_2) - SumQ(x_1-1, y_2) - SumQ(x_2, y_1-1) + SumQ(x_1-1, y_1-1)) -$$

$$-\frac{1}{|R|}(Sum(x_2, y_2) - Sum(x_1-1, y_2) - Sum(x_2, y_1-1) + Sum(x_1-1, y_1-1))^2 \equiv$$

$$SumQ(R) - \frac{1}{|R|}Sum^2(R)$$

dans laquelle :

(x$_1$, y$_1$), (x$_2$, y$_2$) sont des coordonnées des points en haut à gauche et en bas à droite du rectangle R.

24. Procédé selon la revendication 23 comprenant le calcul de la mesure de similarité en utilisant l'image intégrale par le calcul de $|T_i|\sigma^2(T_i)$ pour des régions constituées d'une union de rectangles $T_i = R_1 \cup R_2 \dots R_{Ki}$ selon la relation :

$$|T_i|\sigma^2(T_i) = \sum_j SumQ(R_j) - \frac{1}{|R_j|} Sum^2(R_j)$$

25. Procédé selon l'une quelconque des revendications 1 à 24, comprenant l'obtention d'une mesure de similarité pour chaque région d'une pluralité de régions dans l'image pour obtenir une carte de similarité et l'identification de maxima ou de minima locaux selon la mesure de similarité.

26. Procédé selon la revendication 25 comprenant la comparaison de maxima ou minima locaux avec un seuil.

27. Procédé selon l'une quelconque des revendications 1 à 26, comprenant l'utilisation de conditions additionnelles concernant l'objet d'intérêt dans la détection d'objet.

28. Procédé selon la revendication 27, dans lequel les conditions additionnelles impliquent des valeurs statistiques dérivées des tests d'hypothèses statistiques.

29. Procédé selon l'une quelconque des revendications 1 à 28, comprenant l'utilisation d'une pluralité de gabarits, chacun représentant un objet, et l'obtention d'une mesure de similarité en utilisant chaque gabarit de la pluralité de gabarits, et l'utilisation de la pluralité des mesures de similarité, par exemple par combinaison, pour localiser l'objet.

30. Procédé selon l'une quelconque des revendications 1 à 29, comprenant les étapes consistant à générer une pluralité de versions de l'image à des résolutions différentes et une pluralité de versions du gabarit à des résolutions différentes, à exécuter la concordance avec le gabarit à une première résolution et la concordance avec le gabarit à une seconde résolution supérieure.

31. Procédé selon la revendication 30, dans lequel la concordance à une première résolution est destinée à détecter une région d'intérêt contenant l'objet, et la concordance à une seconde résolution est effectuée à l'intérieur de la région d'intérêt.

32. Procédé selon la revendication 30 ou 31, comprenant l'ajustement du gabarit pour une résolution, par exemple en fusionnant ou en excluant des régions du gabarit, ou en changeant la taille ou la forme du gabarit ou de régions du gabarit, en fonction des résultats de détection à une résolution différente.

33. Procédé de recherche d'un objet dans une séquence d'images, comprenant les étapes consistant à détecter un objet en utilisant le procédé selon l'une quelconque des revendications 1 à 32, à prédire un emplacement approximatif de l'objet dans l'image suivante et à utiliser la prédiction pour déterminer une région d'intérêt dans l'image suivante, en utilisant le procédé selon l'une quelconque des revendications 1 à 31 dans la région d'intérêt pour détecter l'objet.

34. Procédé selon la revendication 33, comprenant l'ajustement du gabarit pour une image dans la séquence d'images, par exemple en fusionnant ou excluant des régions du gabarit ou en changeant la taille ou la forme du gabarit ou des régions du gabarit, en fonction des résultats de détection dans une image différente de la séquence d'images.

35. Procédé selon l'une quelconque des revendications précédentes pour détecter des caractéristiques faciales et/ou des visages.

36. Procédé selon l'une quelconque des revendications précédentes pour détecter des caractéristiques dans des images satellitaires, des images géographiques ou similaires.

37. Procédé selon l'une quelconque des revendications précédentes pour détecter des marqueurs fiduciaires, des signalisations routières, des filigranes ou similaires.

**38.** Appareil pour exécuter le procédé selon l'une quelconque des revendications 1 à 37.

**39.** Dispositif de commande programmé pour exécuter le procédé selon l'une quelconque des revendications 1 à 37.

**40.** Appareil comprenant le dispositif de commande de la revendication 39 et des moyens d'enregistrement pour enregistrer des images.

**41.** Programme informatique, système informatique ou support d'enregistrement lisible par ordinateur pour exécuter le procédé selon l'une quelconque des revendications 1 à 37.

*Image*

**1.1** → Integral image computation

*Integral image $I(x,y)$*

**1.2** — Scan all image pixels

$y=0$

$y=y+1$

$y>y_{max}$ — Yes

No

$x=0$

$x=x+1$

$x>x_{max}$ — Yes

No

*Topological template*
$T_0 = T_1 \cup ... \cup T_M$

**1.3** — Locate the template at (x,y) and select $M$ template-defined pixel groups

**1.4** — Compute:
- $m_0(x,y), ..., m_M(x,y)$,
- $\sigma^2_0(x,y), ..., \sigma^2_M(x,y)$
- $SNR(x,y)$

*A priori information about the object*

$m_i(x,y) < m_j(x,y)$ — No

Yes

**1.5** — $SNR(x,y) = 1$

**1.6** — Local maxima search

**1.7** — Local maxima thresholding

*Object locations*

## Fig. 1

Fig. 2

Fig. 3

Fig. 4

Fig. 5

(a)

(b)

(c) (d) (e) (f) (g)

# Fig. 6

(a) (b)

(c)

# Fig. 7

(a)          (b)          (c)          (d)

(e)

# Fig. 8

**EP 1 693 783 B1**

**Patent documents cited in the description**

- US 20030091238 A

**Non-patent literature cited in the description**

- **NICU SEBE ; MICHAEL S. LEW ; DIONYSIUS P. HUJISMANS, H.** Toward Improved Ranking Metrics. *IEEE Transactions on Pattern Analysis and Machine Intelligence,* 2000, vol. 22, 1132-1142
- **CHUNG, KL.** Fast Stereo Matching Using Rectangular Subregioning and 3D Maximum-Surface Techniques. *International Journal of Computer Vision.,* May 2002, vol. 47 (1/2/3), 99-117
- **A.K.JAIN ; Y.ZHONG ; S.LAKSHMANAN.** Object Matching Using Deformable Templates. *IEEE Transactions on Pattern Analysis and Machine Intelligence,* March 1996, vol. 18 (3), 267-278
- **Y. KELLER ; A. AVERBUCH.** Unified Approach To FFT-Based Image Registration. *IEEE International Conference on Acoustics,* May 2002